# FASCICULE DE BREVET EUROPEEN

(11) **EP 2 634 683 B1**
(45) Date de publication et mention de la délivrance du brevet: **29.08.2018**
(21) Numéro de dépôt: 13155095.6
(22) Date de dépôt: 13.02.2013
(51) Int. Cl.: G06F 3/0485, G06F 3/0488

(54) **Procédé de navigation au sein d'un contenu affichable à l'aide de commandes de navigation, dispositif de navigation et programme associé**
Navigationsverfahren innerhalb eines anzeigbaren Inhalts mit Hilfe von Navigationssteuerbefehlen, Navigationsvorrichtung und entsprechendes Computerprogramm
Method for navigating displayable content using navigation commands, navigation device and associated program

(30) Priorité: 29.02.2012 FR 1251820
(43) Date de publication de la demande: 04.09.2013
(73) Titulaire: Orange, 75015 Paris (FR)
(72) Inventeur: Alvarado, Cuihtlauac, 22300 Lannion (FR)
(74) Mandataire: Vidon Brevets & Stratégie

(56) Documents cités:
- US-A1- 2011 090 255
- US-A1- 2011 107 264
- US-A1- 2011 161 892
- US-A1- 2012 026 181

## Description

### 1. Domaine de l'invention

L'invention concerne un procédé de navigation au sein d'un contenu affichable. Une partie du contenu est affichée et des commandes de navigation permettent de déplacer la fenêtre de visualisation visible sur l'écran. La présente invention permet d'avertir l'utilisateur que l'extrémité du contenu affichable est atteinte.

### 2. Art antérieur

De nombreux appareils disposent de nos jours de dispositifs d'affichage et de moyens d'introduction de commande tels qu'un clavier, une souris ou un outil de reconnaissance vocale. Avec ces moyens, un utilisateur peut introduire des commandes et voir sur un écran de visualisation les informations demandées. Des écrans tactiles permettent à la fois d'afficher de l'information, de présenter des icônes de commandes et de détecter la sélection d'une icône pour activer la commande associée. De tels écrans permettent une interaction très poussée avec l'utilisateur et un nombre quasi infini de commandes puisqu'il ne dépend que de la capacité pour l'appareil de générer des menus.

Parmi les commandes classiques qu'un utilisateur peut introduire sur un dispositif d'affichage, on trouve les commandes de navigation. Ces commandes interviennent lorsque l'utilisateur a lancé une recherche d'éléments provenant d'un réseau ou d'une mémoire de son appareil. Les éléments sont alors présentés à l'écran sous forme d'une liste d'identificateurs dans laquelle l'utilisateur peut naviguer. Si un élément de la liste l'intéresse, l'utilisateur peut le sélectionner et lancer une action sur l'élément associé. Par exemple, si l'utilisateur demande à voir toutes les applications disponibles sur son téléphone portable, alors il lance l'affichage d'une liste d'icônes associées aux applications disponibles. L'utilisateur navigue sur la liste affichée en déplaçant un focus. Lorsque le focus est positionné sur l'icône souhaitée, l'utilisateur introduit une commande de sélection pour activer l'exécution de l'application associée à cette icône.

D'autres identificateurs peuvent être utilisés pour identifier un élément sélectionnable, par exemple une chaîne de caractère représentant le titre d'une chanson, une photo identifiant une oeuvre d'art, une séquence vidéo identifiant un film, etc. Si le nombre d'identificateurs est important, il n'est pas possible d'afficher tous les identificateurs de la liste. Ainsi, l'appareil affiche un fragment de la liste et propose à l'utilisateur des commandes de navigation permettant de déplacer la fenêtre de visualisation au sein de la liste.

Lorsque l'utilisateur active une commande de navigation, c'est à dire une commande visant à déplacer la fenêtre de visualisation, il s'attend donc à un changement du contenu affiché sur son écran. Les identificateurs sont généralement disposés selon une matrice à deux dimensions, la fenêtre de visualisation se déplace en fonction des quatre commandes de direction suivantes : Haut, Bas, Gauche et Droit. Les commandes de navigation peuvent être assimilées à des commandes de déplacement de la fenêtre de visualisation vers une direction donnée.

Un problème intervient lorsque dans la direction spécifiée par la commande, il n'y a plus d'identificateur à afficher. Si la commande de navigation continue à agir sur l'affichage alors la fenêtre de visualisation montrant les identificateurs se déplace au-delà de l'extrémité du document ou du dernier élément présent dans cette direction et l'écran devenant vide de contenu, l'utilisateur ne peut déterminer la direction la direction lui permettant de faire revenir des identificateurs à l'écran. De plus si l'écran est vide, l'utilisateur peut croire que son appareil est hors service puisque l'activation de la commande ne produit pas d'effet visuel. Dans de telles circonstances, il paraît souhaitable d'informer l'utilisateur que l'activation d'une commande de navigation produit bien un effet et que, le bord du contenu affichable étant atteint, l'activation de nouvelles commandes dans cette direction ne fera pas apparaître un nouveau contenu à l'écran.

La demande de brevet WO 2004/105392 décrit une navigation au sein d'une liste ordonnée d'éléments, en affichant des sous-listes. Un élément est dans le focus et des commandes de navigation permettent de le déplacer. Pour situer cet élément au sein de la sous-liste affichée, l'élément courant est encadré de deux éléments de la liste. Cette présentation n'est plus possible lorsque l'élément est le dernier (ou le premier) de la liste. Dans ce cas, le menu tel que décrit par les figures 9, 10 et 11 de cette demande, affiche une sous-liste avec l'élément dans le focus précédé ou suivi d'un emplacement vide. Cet emplacement vide est le signe différenciateur qu'une extrémité de la liste est atteinte. Mais ce document antérieur montre une absence de mobilité de l'affichage lorsque la fin de liste est atteinte, de ce fait l'utilisateur ne peut déterminer si son appareil est hors service ou s'il a atteint une limite de navigation.

Le document US 2012/026181, publié le 2 Février 2012, décrit un navigateur affichant des informations dans un menu déroulant. Lorsque l'extrémité des informations est atteinte et qu'il n'est plus possible d'en afficher d'autres dans la direction indiquée par la commande, alors l'image est déformée en faisant subir à une partie de l'image un étirement dans le sens inverse de celui indiqué par la commande.

Le document US 2011/161892, publié le 30 juin 2011, décrit une interface utilisateur avec un écran tactile et une fonction de défilement provoquée par le mouvement d'un doigt sur l'écran. Des commandes sont introduites pour déplacer la fenêtre chargée d'afficher une partie d'une image qui n'est pas visualisée entièrement. Lorsque la limite de l'image est atteinte, le contenu affiché subit une déformation.

Le document WO 2011/090255, publié le 21 Avril 2011, décrit ne navigation au sein d'un document affiché sur un écran tactile. Une déformation graphique est appliquée à la partie du contenu affiché lorsqu'un bord ou une extrémité est atteint. La déformation consiste à rétrécir, étirer ou faire rebondir le contenu affiché.

Le document US 2011/107264, publié le 5 Mai 2011, décrit un appareil d'affichage avec une fonction de défilement dans une liste d'éléments. La liste affichée subit une modification graphique lorsqu'une extrémité est atteinte.

La présente invention permet d'avertir d'une autre façon que l'extrémité de la liste des éléments dans la direction actuelle de navigation est atteinte.

### 3. Objectifs de l'invention

La présente invention présente une façon plus conviviale et plus intuitive d'informer l'utilisateur que l'extrémité de la liste des éléments dans la direction actuelle de navigation est atteinte et qu'il est donc inutile de continuer à activer des commandes de navigation dans cette direction.

### 4. Exposé de l'invention

Selon un aspect fonctionnel, l'invention concerne un procédé de navigation au sein d'un contenu visuel conforme au paragraphe introductif. Le procédé inclut une étape de duplication en deux images identiques de ladite partie affichée lorsqu'une extrémité du contenu visuel se situant dans la direction du déplacement spécifiée par la commande de navigation est affichée sur un écran. Une première image reste immobile et une seconde image se déplace dans la direction du déplacement spécifiée par la commande de navigation tant que cette commande est active.

De cette façon, l'utilisateur constate que sa commande de navigation a bien été prise en compte par son appareil et en voyant la duplication de l'image à un certain moment, il sait que l'extrémité du contenu visuel dans cette direction de navigation est atteinte.

Selon un exemple particulier de réalisation, le moyen d'affichage est un écran tactile et l'activation de la commande de navigation consiste à déplacer un objet sur ledit écran. De plus, le déplacement de la seconde image de la fenêtre de visualisation est contrôlé par le déplacement de l'objet sur l'écran. De cette manière, l'utilisateur contrôle directement le déplacement de la fenêtre de visualisation et face au nouveau déplacement de la fenêtre de navigation, il s'aperçoit immédiatement que l'extrémité du contenu visuel est atteinte.

Selon un autre exemple de réalisation, la commande de navigation est caractérisé par un état actif et un état de repos, et l'amplitude du déplacement de la seconde image de la fenêtre de visualisation dépend du temps au cours duquel la commande est active. De cette manière, l'utilisateur contrôle le déplacement de la fenêtre de navigation à l'aide de simple commandes de navigation.

Selon un autre exemple de réalisation, la vitesse de déplacement de la seconde image de la fenêtre de visualisation est variable pendant le temps au cours duquel la commande est active. De cette manière, la seconde image qui dépasse l'extrémité du menu affiché se déplace de moins en moins lors de sa sortie de l'écran.

Selon un exemple de réalisation, l'introduction de la commande de navigation s'effectue à l'aide d'un clavier comporte des touches de navigation, ces touches spécifiant une direction de déplacement. De cette manière, l'utilisateur contrôle le déplacement de la fenêtre de navigation à l'aide de simples touches de navigation. Selon un exemple de réalisation, l'introduction de la commande de navigation s'effectue par reconnaissance vocale. De cette manière, l'utilisateur contrôle le déplacement de la fenêtre de navigation à l'aide de sa simple voix.

Selon un exemple de réalisation, la navigation comporte une étape de retour à un contenu affiché avec une seule image déclenchée lors la commande de navigation n'est plus active. De cette manière, l'utilisateur voit un retour automatique à un contenu affiché correspondant au moment de la navigation où l'extrémité du contenu visuel est atteinte. Selon un exemple de réalisation, la vitesse de déplacement de la seconde image varie au cours de l'étape de retour. De cette manière, le déplacement de la seconde image est optimisé. Selon un exemple de réalisation, la durée du déplacement de la seconde image au cours de l'étape de retour est inférieure au temps de déplacement de la seconde image lorsque la commande de navigation est activée. De cette manière, cette étape de retour à un menu de navigation initial est plus rapide.

Selon un autre aspect matériel, l'invention concerne également un appareil électronique comportant un moyen d'affichage d'un contenu visuel et d'un moyen d'introduction de commande de navigation, lesdites commandes de navigation permettant de sélectionner une partie du contenu afin de l'afficher sur le moyen d'affichage. L'appareil comporte un moyen de duplication en deux images identiques de ladite partie affichée lorsqu'une extrémité dudit contenu se situant dans la direction du déplacement spécifiée par la commande de navigation est affichée sur le moyen d'affichage. Une première image reste immobile et une seconde image se déplace dans la direction du déplacement spécifiée par la commande de navigation tant que ladite commande est active.

Selon un autre aspect matériel, l'invention concerne également un programme d'ordinateur caractérisé en ce qu'il comprend des instructions de code de programme pour la mise en oeuvre d'une étape de duplication en deux images identiques d'un contenu affiché lors de la navigation dans un contenu visuel tel que décrit plus haut lorsque ce programme est exécuté par un processeur.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 présente les éléments principaux d'un appareil permettant de mettre en oeuvre l'invention selon un exemple particulier de réalisation,
- les figures 2.A à 2.D présentent des apparences d'écran générées au cours de la navigation selon un exemple de réalisation,
- la figure 3 montre le déplacement des images de la fenêtre de navigation affichée sur un écran tactile selon un exemple de réalisation,
- la figure 4 montre le déplacement des images de la fenêtre de navigation lors de l'activation d'une commande selon un autre exemple de réalisation.

### 6. Description d'un mode de réalisation de l'invention

On décrit tout d'abord la structure d'un appareil multimédia 1 muni d'un dispositif d'affichage 2 selon un exemple de réalisation de l'invention. On décrit ici un téléphone intelligent, ou « smartphone », mais d'autres appareils sont également utilisables pour la présente invention, par exemple un ordinateur personnel ou un PVR, ou tout appareil capable d'accéder à des contenus affichables et disposant de moyens de création et d'affichage de menus de navigation.

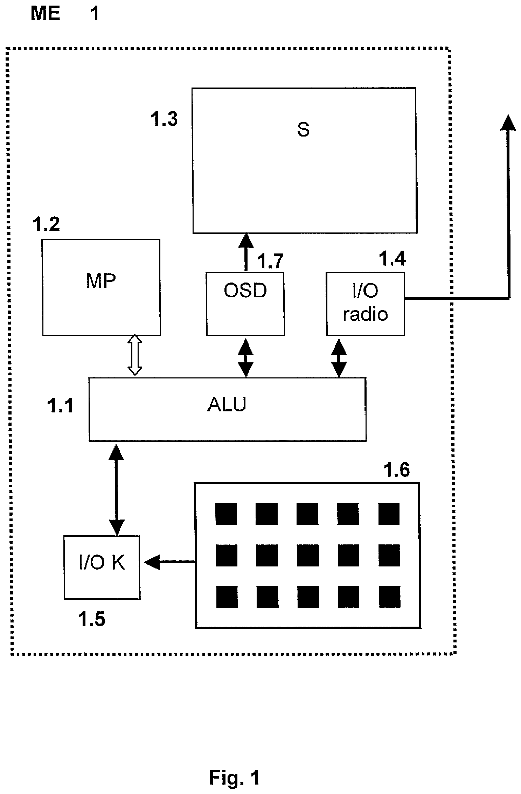

La figure 1 présente les principaux éléments d'un smartphone selon un exemple de réalisation. Le smartphone 1 comporte une unité centrale ALU 1.1 reliée à une mémoire de programme exécutable MP 1.2, un écran S 1.3, un module de communication radio 1.4, et un module d'interface 1.5 avec un clavier 1.6. Le module de communication permet la communication dans la gamme de fréquences radio compatible avec les réseaux de communication sans fil tels que : 2G/GSM (« Global System Mobility technology » en Anglais, littéralement traduit par « technologie du système de goupe mobile »), ou 3G/UMTS (« Universal Mobile Telephone System technology » en Anglais, littéralement traduit par « technologie du système universel de téléphonie mobile »), ou 4G/LTE (« Long Term Evolution technology » en Anglais, littéralement traduit par « Technique d'évolution à long terme »). Selon un mode préféré de réalisation, l'écran 1.3 est de type tactile, de ce fait le clavier 1.6. est en quelque sorte intégré à l'écran. Selon une variante, le clavier est distinct de l'écran et dispose d'au moins quatre touches de navigation dont la sérigraphie montre des flèches orientées vers au moins deux directions opposées telles que gauche et droite. Dans le cas d'un écran tactile, l'activation d'une commande de direction de navigation s'effectue en glissant le doigt ou un quelconque objet comme un stylet dans la direction souhaitée, de cette façon l'utilisateur peut indiquer un grand nombre de directions de navigation différentes.

Le smartphone comprend également un circuit 1.7 d'affichage de données sur l'écran, appelé souvent circuit OSD, de l'Anglais "On Screen Display" (signifiant "affichage sur l'écran"). Le circuit OSD 1.7 est un générateur de texte et de graphisme qui permet d'afficher à l'écran des menus, des pictogrammes (par exemple, un numéro correspondant à la chaîne visualisée) et qui permet d'afficher les menus de navigation conformément à la présente invention. Le circuit OSD 1.7 est contrôlé par l'Unité Centrale 1.1 et s'intercale entre celle-ci et l'écran 1.3.

La mémoire programme contient des programmes exécutables résidents et éventuellement, une partie de type Lecture/Ecriture pour l'enregistrement et l'exécution de programmes téléchargés. Ces programmes téléchargés sont typiquement des applications dédiées à un usage déterminées tels que messagerie, recherche d'informations sur Internet, téléchargement de documents audio et/ou visuels, télé-achat, etc. La mémoire programme MP contient un module de navigation qui sera appelé par la suite : le « Navigateur ». Ce module est chargé de présenter des documents ou des listes d'éléments à l'écran et de gérer l'activation de commandes de navigation permettant de changer le contenu affiché à l'écran. Les commandes de navigation permettent typiquement de faire défiler le contenu affiché à l'écran dans la direction spécifiée par la commande introduite. Le Navigateur est avantageusement réalisé sous la forme d'un module de programme enregistré dans la mémoire MP. Il peut aussi être réalisé sous la forme d'un circuit spécialisé de type ASIC par exemple.

Après avoir détaillé les différents éléments de l'invention, nous allons maintenant expliquer comment ceux-ci coopèrent.

Dans un premier temps, l'utilisateur lance son Navigateur sur son appareil multimédia 1. Il spécifie ensuite le type de contenus visuel sur lequel il désire naviguer. Sous le terme de navigation, on entend l'affichage d'identificateurs d'éléments tels que des documents ou des parties d'un document, et l'introduction de commandes permettant de modifier le contenu de la fenêtre de visualisation. Le Navigateur peut par exemple afficher une liste d'identificateurs de fichiers, ou une liste de services accessibles à partir d'un dispositif portable, ou encore le contenu d'un album photo, etc. Dans le cadre de la présente invention, le contenu de navigation comprend une pluralité d'identificateurs graphiques disposés selon au moins une ligne de navigation. Deux commandes au moins sont disponibles de façon à spécifier une direction de déplacement dans une direction et dans la direction opposée selon ladite ligne. La présente invention permet de prévenir l'utilisateur qu'il a atteint le dernier élément placé sur la ligne de navigation dans la direction spécifiée par la commande actuellement activée.

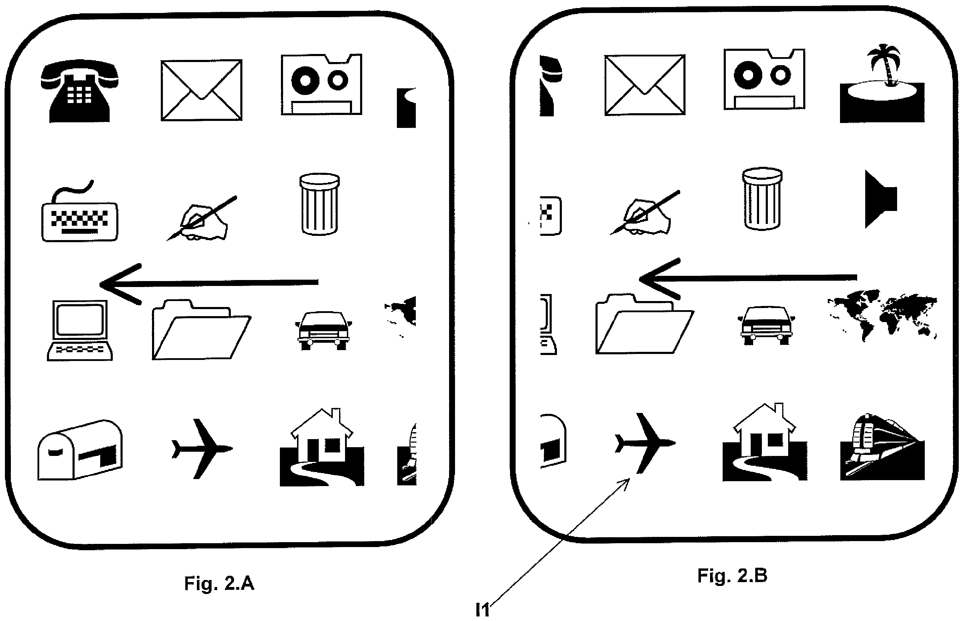

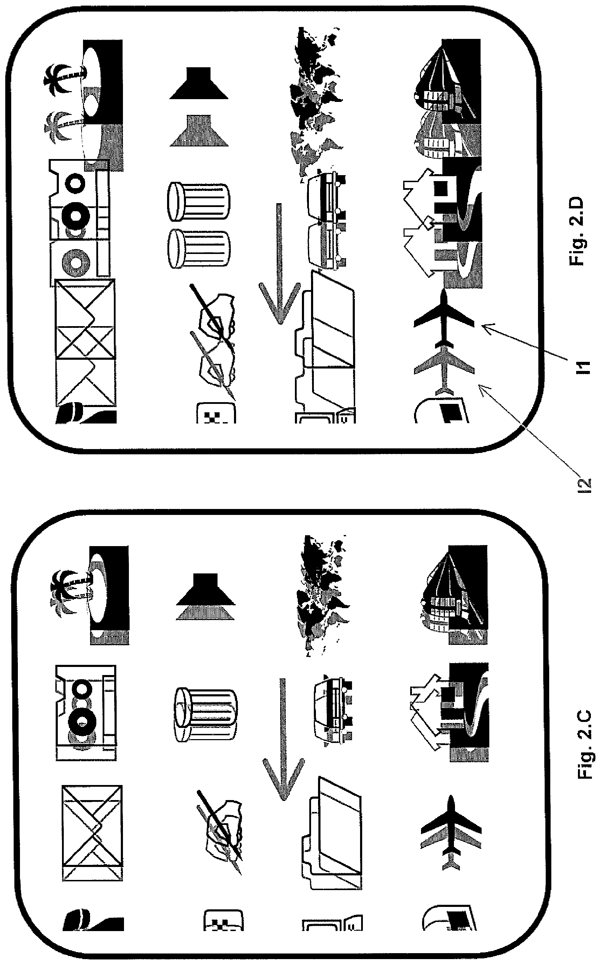

Les figures 2.A à 2.F présentent des apparences d'écran générées au cours de la navigation selon un premier exemple de réalisation. L'écran 1.3 est celui d'un téléphone mobile dit « intelligent » ou smartphone en Anglais, il est de type tactile et d'une taille de 4 cm de large par 6,5 cm de hauteur environ. L'activation de commandes de navigation et de sélection s'effectue en présentant le doigt ou un quelconque objet tel qu'un stylet sur l'écran 1.3. Le menu de navigation comprend seize icônes donnant accès à autant d'applications. Les seize icônes sont disposées en quatre colonne de 4 icônes. Compte tenu de sa taille, l'écran 1.3 ne peut afficher que 12 icônes en entier dans la fenêtre de visualisation.

La figure 2.A présente l'écran 1.3 avec une fenêtre de visualisation affichant les 12 icônes de gauche en entier, on peut apercevoir une partie de la colonne des 4 icônes à droite. Le doigt de l'utilisateur (ou son stylet) qui est au centre de l'écran, se déplace alors de quelques millimètres sur la gauche. La figure 2.B présente une nouvelle fenêtre de visualisation où les 12 icônes de droite sont affichées en entier. L'utilisateur continue alors à déplacer son doigt ou son stylet de quelques millimètres vers la gauche, comme le montre la flèche au centre de la figure. Le Navigateur détecte que l'extrémité du menu de navigation se situant dans la direction du déplacement spécifiée par la commande de navigation est atteinte, et de ce fait la commande introduite ne peut faire apparaître d'autres icônes. Le Navigateur informe l'utilisateur de cet état. La figure 2.C présente alors une nouvelle fenêtre de visualisation où l'image de la fenêtre de visualisation est dupliquée en deux images par le circuit OSD sous le contrôle du Navigateur, une première image (en noir sur la figure) reste immobile par rapport à la figure 2.B, et une seconde image (en gris sur la figure) est légèrement décalée vers la gauche, dans la direction indiquée par le doigt ou le stylet. Supposons que le doigt continue encore à se déplacer vers la gauche, comme le montre la flèche au centre de la figure 2.C. La figure 2.D présente alors un contenu affiché comprenant deux images I1 et I2 identiques, l'une étant nettement décalée par rapport à l'autre. Pour des questions de lisibilité, une au moins des images est transparente de façon à voir l'autre. Selon un mode de réalisation, l'image mobile I2 apparaît atténuée par rapport à l'autre image I1 qui est immobile. L'image I1 présente les 12 icônes de droite en entier, l'image I2 présente le menu de navigation décalé vers la gauche avec les icônes de la colonne de gauche à moitié visible. Cette représentation avec deux images identiques et décalées montre à l'utilisateur que la première image I1 est bloquée sur l'écran, et que la navigation dans cette direction n'a plus d'effet car l'extrémité du menu de navigation est atteinte, et que la seconde image I2 est toujours associée à la navigation montrant ainsi que le Navigateur est toujours opérationnel.

Selon un mode préféré de réalisation, le déplacement de la seconde image I2 de la fenêtre de visualisation est identique au déplacement du doigt ou du stylet appliqué sur l'écran 1.3. De cette manière, l'utilisateur voit que le déplacement de son doigt ou d'un stylet déclenche une modification de l'affichage en rapport avec la commande introduite et en déduit que son appareil 1 reste opérationnel.

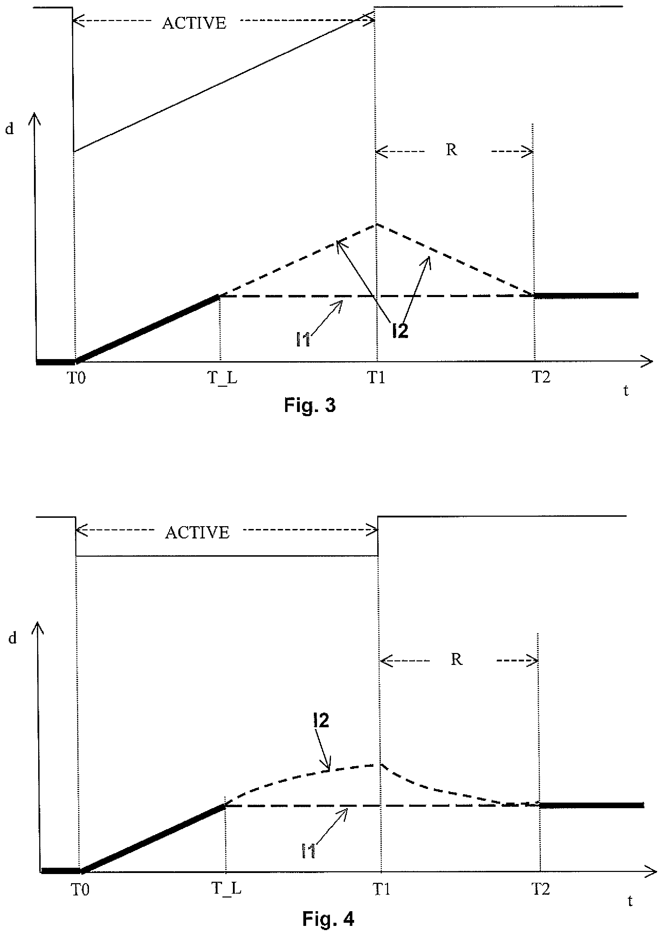

La figure 3 illustre ce mode de fonctionnement. La courbe présentée montre le déplacement «d» des images I1 et I2 et le déplacement de l'objet sur l'écran en fonction du temps «t». Au cours du déplacement de l'objet sur l'écran présenté en haut de la figure, la commande est considérée « ACTIVE ». Le déplacement commence à l'instant T0 et se termine à l'instant T1. Le déplacement de l'objet sur l'écran contrôle le déplacement de l'image dans la fenêtre visuelle, l'objet et l'image affichée déplaçant avec la même amplitude et la même direction jusqu'à ce que au moment T_L, l'extrémité du menu de navigation soit atteinte dans la direction du déplacement spécifiée par l'objet. A ce moment T_L, l'image se dédouble : une image I1 reste immobile, et l'autre image I2 continue de se déplacer en fonction de la position de l'objet sur l'écran. A l'instant T1, l'écran présente par exemple l'apparence illustré à la figure 2.D, l'image I2 cesse de se déplacer dans la direction spécifiée par la commande. Selon un mode particulier de réalisation, l'image I2 revient en arrière pendant une durée R pour se positionner au même endroit que l'image I1. A la fin de la durée R, à l'instant noté T2 les deux images se superposent parfaitement et fusionne pour ne reformer qu'une seule image. Ce retour en arrière de la seconde image I2 fait comprendre à l'utilisateur qu'une partie de sa dernière commande est effacée car l'extrémité du menu de navigation est atteint.

Selon un autre mode de réalisation, le moyen d'introduction de commandes est caractérisé par un état d'activation et un état de repos. De telles commandes sont par exemple des touches de navigation, typiquement marquée de flèches indiquant des directions. Dans ce mode, la durée d'appui sur la touche définit le déplacement de la fenêtre de visualisation dans la direction spécifiée par la touche. Dès que l'utilisateur relâche la touche, la fenêtre de visualisation cesse de se déplacer au sein du menu de navigation. Des commandes caractérisées par deux états consistent également en l'affichage d'icônes sur l'écran 1.3. Ces icônes représentant des commandes de navigation du type : «gauche», «droite», «haut», «bas» peuvent être sélectionnées ou non. De telles commandes peuvent aussi être réalisées à l'aide d'un moteur de reconnaissance vocale permettant d'interpréter des expressions sonores telles que « gauche », «droite», «haut», «bas». Le moteur de reconnaissance vocale transcrit les signaux sonores en commandes de navigation. La fin de l'introduction d'une commande intervient lorsque l'utilisateur prononce le mot « stop ».

Dans ce mode de réalisation, l'amplitude du déplacement est fonction de la durée d'activation de la commande. Selon un mode simple de réalisation, l'amplitude du déplacement est proportionnelle à la durée. Selon un autre mode de réalisation, l'amplitude du déplacement varie en fonction de la durée d'activation de la commande selon une fonction logarithmique. La figure 4 illustre cet autre mode.

La partie haute de la figure 4 montre la durée au cours de laquelle une touche de direction est pressée, un icône de navigation est sélectionnée ou encore une commande vocale est active. Le déplacement de la fenêtre de visualisation commence au moment T0 où l'utilisateur active la commande. Au moment T_L, l'extrémité du menu de navigation est atteinte dans la direction spécifiée par la commande. A ce moment T_L, l'image se dédouble : une image I1 reste immobile, et l'autre image I2 continue de se déplacer dans la direction spécifiée par la commande. La vitesse de déplacement de l'image I2 varie de moins en moins au cours de la durée entre les moments T_L et T1, selon une variation logarithmique. De cette façon, l'image I2 disparaît dans la direction du déplacement qu'après un très long moment d'activation de la commande, cette situation n'intervenant généralement pas.

Au moment T1, l'utilisateur relâche la commande et selon un mode particulier de réalisation, l'image I2 revient en arrière pendant une durée R pour se positionner au moment T2 au même endroit que l'image I1. De même que précédemment, la vitesse de déplacement du retour de l'image à la même position qu'au moment T_L varie de façon logarithmique en fonction du temps.

Dans l'un ou l'autre des deux modes de réalisations illustrés par les figures 3 et 4, la durée du retour de l'image I2 (c'est à dire la durée entre T1 et T2) et la durée entre T_L et T1 ont la même valeur. Selon une variante, la durée entre T1 et T2 est une fraction de la durée entre T_L et T1, de façon que l'utilisateur n'attende pas trop longtemps le retour du menu de navigation avec une image unique. L'expérience montre que pour un écran de 4 cm de large et 6,5 de haut, un rapport de 3 est optimal. Par exemple, pour une durée entre T_L et T1 de 1 secondes, la durée entre T_L et T1 est de 1/3 de secondes.

L'invention n'est pas limitée aux modes de réalisation qui viennent d'être décrits. En particulier, l'invention peut être mise en oeuvre par tout appareil multimédia disposant d'une interface utilisateur et d'un moyen d'affichage. Les contenus affichables reproduits par l'appareil peuvent être de type texte, photo ou graphique.

## Revendications

1. Procédé de navigation sur un contenu visuel, le contenu étant disponible au niveau d'un terminal (1) disposant d'un moyen d'introduction (1.6) de commandes de navigation, lesdites commandes de navigation permettant de sélectionner une partie du contenu afin de l'afficher sur un moyen d'affichage (1.3) du terminal ;
le procédé étant **caractérisé en ce qu'**il comporte une étape de duplication en deux images identiques (I1, I2) de ladite partie affichée lorsqu'une extrémité dudit contenu se situant dans la direction du déplacement spécifiée par la commande de navigation est affichée sur le moyen d'affichage (1.3), une première image (I1) restant immobile, une seconde image (I2) se déplaçant dans la direction du déplacement spécifiée par la commande de navigation tant que ladite commande est active.

2. Procédé de navigation selon la revendication 1 dans lequel le moyen d'affichage est un écran tactile (1.3, 1.6) et l'activation de la commande de navigation consiste à déplacer un objet sur ledit écran ; le procédé étant **caractérisé en ce que** le déplacement de la seconde image (I2) de la fenêtre de visualisation est contrôlé par le déplacement de l'objet sur l'écran (1.3, 1.6).

3. Procédé de navigation selon la revendication 1 dans lequel la commande de navigation est **caractérisée par** un état actif et un état de repos ; le procédé étant **caractérisé en ce que** l'amplitude du déplacement de la seconde image (I2) de la fenêtre de visualisation dépend du temps au cours duquel la commande est active.

4. Procédé de navigation selon la revendication 3 ; **caractérisé en ce que** la vitesse de déplacement de la seconde image (I2) de la fenêtre de visualisation est variable pendant le temps au cours duquel la commande est active.

5. Procédé de navigation selon l'une des revendications 3 et 4 ; **caractérisé en ce que** le moyen d'introduction de commande de navigation est un clavier (1.6) comportant des touches de navigation, ces touches spécifiant une direction de déplacement.

6. Procédé de navigation selon l'une des revendications 3 et 4 ; **caractérisé en ce que** l'introduction de commandes de navigation s'effectue par reconnaissance vocale.

7. Procédé de navigation selon l'une quelconque des revendications précédentes ; **caractérisé en ce qu'**il comporte une étape de retour à un contenu affiché avec une seule image, ladite étape de retour étant déclenchée lorsque la commande de navigation n'est plus active.

8. Procédé de navigation selon la revendication 7 ; **caractérisé en ce que** la vitesse de déplacement de la seconde image (I2) varie au cours de l'étape de retour.

9. Procédé de navigation selon la revendication 7 ou 8 ; **caractérisé en ce que** la durée du déplacement de la seconde image (I2) au cours de l'étape de retour est inférieure au temps de déplacement de la seconde image lorsque la commande de navigation est active.

10. Appareil électronique (1) comportant un moyen d'affichage (1.3) d'un contenu visuel et d'un moyen d'introduction (1.6) de commande de navigation, lesdites commandes de navigation permettant de sélectionner une partie du contenu afin de l'afficher sur le moyen d'affichage (1.3) ;
l'appareil étant **caractérisé en ce qu'**il comporte un moyen de duplication (1.1, 1.2) en deux images identiques de ladite partie affichée lorsqu'une extrémité dudit contenu se situant dans la direction du déplacement spécifiée par la commande de navigation est affichée sur le moyen d'affichage (1.3), une première image restant immobile, une seconde image se déplaçant dans la direction du déplacement spécifiée par la commande de navigation tant que ladite commande est active.

11. Programme d'ordinateur **caractérisé en ce qu'**il comprend des instructions de code de programme pour la mise en oeuvre d'une étape de duplication en deux images identiques d'un contenu affiché lors de la navigation dans un contenu visuel selon l'une quelconque des revendications 1 à 9 lorsque ce programme est exécuté par un processeur.

## Patentansprüche

1. Verfahren zur Navigation auf einem visuellen Inhalt, wobei der Inhalt an einem Endgerät (1) verfügbar ist, das über ein Mittel zur Eingabe (1.6) von Navigationsbefehlen verfügt, wobei die Navigationsbefehle ermöglichen, einen Teil des Inhalts auszuwählen, um ihn auf einem Anzeigemittel (1.3) des Endgerätes anzuzeigen; wobei das Verfahren **dadurch gekennzeichnet ist, dass** es einen Schritt der Verdopplung des angezeigten Teils zu zwei identischen Bildern (I1, 12) umfasst, wenn ein Ende des Inhalts, das sich in der durch den Navigationsbefehl festgelegten Richtung der Verschiebung befindet, auf dem Anzeigemittel (1.3) angezeigt wird, wobei ein erstes Bild (I1) unbeweglich bleibt, während ein zweites Bild (I2) sich in der durch den Navigationsbefehl festgelegten Richtung der Verschiebung verschiebt, solange dieser Befehl aktiv ist.

2. Verfahren zur Navigation nach Anspruch 1, wobei das Anzeigemittel ein Berührungsbildschirm (1.3, 1.6) ist und die Aktivierung des Navigationsbefehls darin besteht, ein Objekt auf diesem Bildschirm zu verschieben; wobei das Verfahren **dadurch gekennzeichnet ist, dass** die Verschiebung des zweiten Bildes (I2) des Visualisierungsfensters durch die Verschiebung des Objekts auf dem Bildschirm (1.3, 1.6) gesteuert wird.

3. Verfahren zur Navigation nach Anspruch 1, wobei der Navigationsbefehl durch einen aktiven Zustand und einen Ruhezustand gekennzeichnet ist; wobei das Verfahren **dadurch gekennzeichnet ist, dass** die Amplitude der Verschiebung des zweiten Bildes (I2) des Visualisierungsfensters von der Zeit abhängt, während welcher der Befehl aktiv ist.

4. Verfahren zur Navigation nach Anspruch 3, **dadurch gekennzeichnet, dass** die Verschiebungsgeschwindigkeit des zweiten Bildes (I2) des Visualisierungsfensters während der Zeit, während welcher der Befehl aktiv ist, variabel ist.

5. Verfahren zur Navigation nach einem der Ansprüche 3 und 4, **dadurch gekennzeichnet, dass** das Mittel zur Eingabe von Navigationsbefehlen eine Tastatur (1.6) ist, die Navigationstasten aufweist, wobei diese Tasten eine Verschiebungsrichtung festlegen.

6. Verfahren zur Navigation nach einem der Ansprüche 3 und 4, **dadurch gekennzeichnet, dass** die Eingabe von Navigationsbefehlen durch Spracherkennung erfolgt.

7. Verfahren zur Navigation nach einem der vorhergehenden Ansprüche, **dadurch gekennzeichnet, dass** es einen Schritt der Rückkehr zu einem mit einem einzigen Bild angezeigten Inhalt umfasst, wobei dieser Rückkehrschritt ausgelöst wird, wenn der Navigationsbefehl nicht mehr aktiv ist.

8. Verfahren zur Navigation nach Anspruch 7, **dadurch gekennzeichnet, dass** die Verschiebungsgeschwindigkeit des zweiten Bildes (I2) im Verlaufe des Rückkehrschrittes variiert.

9. Verfahren zur Navigation nach Anspruch 7 oder 8, **dadurch gekennzeichnet, dass** die Dauer der Verschiebung des zweiten Bildes (I2) während des Rückkehrschrittes kürzer ist als die Verschiebungszeit des zweiten Bildes, wenn der Navigationsbefehl aktiv ist.

10. Elektronisches Gerät (1), welches ein Mittel zur Anzeige (1.3) eines visuellen Inhalts und eines Mittels zur Eingabe (1.6) von Navigationsbefehlen umfasst, wobei die Navigationsbefehle ermöglichen, einen Teil des Inhalts auszuwählen, um ihn auf dem Anzeigemittel (1.3) anzuzeigen;
wobei das Gerät **dadurch gekennzeichnet ist, dass** es ein Mittel zur Verdopplung (1.1, 1.2) des angezeigten Teils zu zwei identischen Bildern, wenn ein Ende des Inhalts, das sich in der durch den Navigationsbefehl festgelegten Richtung der Verschiebung befindet, auf dem Anzeigemittel (1.3) angezeigt wird, umfasst, wobei ein erstes Bild unbeweglich bleibt, während ein zweites Bild sich in der durch den Navigationsbefehl festgelegten Richtung der Verschiebung verschiebt, solange dieser Befehl aktiv ist.

11. Computerprogramm, **dadurch gekennzeichnet, dass** es Programmcodeanweisungen zur Durchführung eines Schrittes der Verdopplung eines bei der Navigation in einem visuellen Inhalt angezeigten Inhalts zu zwei identischen Bildern nach einem der Ansprüche 1 bis 9, wenn dieses Programm von einem Prozessor ausgeführt wird, umfasst.

## Claims

1. Method of navigation around a visual content, the content being available at the level of a terminal (1) having a means (1.6) of entering navigation commands, said navigation commands making it possible to select a part of the content so as to display it on a display means (1.3) of the terminal;
the method being **characterized in that** it comprises a step of duplication into two identical images (II, 12) of said displayed part when an end of said content lying in the direction of the movement specified by the navigation command is displayed on the display means (1.3), a first image (II) remaining stationary, a second image (12) moving in the direction of the movement specified by the navigation command as long as said command is active.

2. Method of navigation according to Claim 1, in which the display means is a touchscreen (1.3, 1.6) and the activation of the navigation command consists in moving an object on said screen; the method being **characterized in that** the movement of the second image (12) of the viewing window is controlled by the movement of the object on the screen (1.3, 1.6).

3. Method of navigation according to Claim 1, in which the navigation command is **characterized by** an active state and a rest state; the method being **characterized in that** the amplitude of the movement of the second image (12) of the viewing window depends on the time during which the command is active.

4. Method of navigation according to Claim 3; **characterized in that** the speed of movement of the second image (12) of the viewing window is variable for the time during which the command is active.

5. Method of navigation according to one of Claims 3 and 4; **characterized in that** the navigation command entry means is a keyboard (1.6) comprising navigation keys, these keys specifying a direction of movement.

6. Method of navigation according to one of Claims 3 and 4; **characterized in that** the entry of navigation commands is performed by voice recognition.

7. Method of navigation according to any one of the preceding claims; **characterized in that** it comprises a step of return to a content displayed with a single image, said return step being triggered when the navigation command is no longer active.

8. Method of navigation according to Claim 7; **characterized in that** the speed of movement of the second image (12) varies during the return step.

9. Method of navigation according to Claim 7 or 8; **characterized in that** the duration of the movement of the second image (12) during the return step is less than the time of movement of the second image when the navigation command is active.

10. Electronic apparatus (1) comprising a means (1.3) of display of a visual content and of a navigation command entry means (1.6), said navigation commands making it possible to select a part of the content so as to display it on the display means (1.3);
the apparatus being **characterized in that** it comprises a means (1.1, 1.2) of duplication into two identical images of said displayed part when an end of said content lying in the direction of the movement specified by the navigation command is displayed on the display means (1.3), a first image remaining stationary, a second image moving in the direction of the movement specified by the navigation command as long as said command is active.

11. Computer program **characterized in that** it comprises program code instructions for the implementation of a step of duplication into two identical images of a content displayed during navigation in a visual content according to any one of Claims 1 to 9 when this program is executed by a processor.
